# EUROPÄISCHE PATENTSCHRIFT

(11) **EP 1 475 324 B1**
(45) Veröffentlichungstag und Bekanntmachung des Hinweises auf die Patenterteilung: **21.06.2006**
(21) Anmeldenummer: 04090154.8
(22) Anmeldetag: 16.04.2004
(51) Int. Cl.: B65G 47/64, B65G 17/00

(54) **Fördersystem für Behälter, insbesondere eine Flughafen-Gepäckförderanlage, und eine vertikale Weiche für ein Fördersystem**
A system for conveying containers, particularly for conveyor installation for baggage in airports, and a vertical switch for a conveyor system
Système de transport pour conteneurs, notamment pour installation de convoyage des bagages dans des aéroports, et aiguille verticale pour un système de convoyage

(30) Priorität: 09.05.2003 DE 10320961
(43) Veröffentlichungstag der Anmeldung: 10.11.2004
(73) Patentinhaber: SIEMENS AKTIENGESELLSCHAFT, 80333 München (DE)
(72) Erfinder: Brixius, Wolfgang, 91077 Neunkirchen A.Br (DE); Gräfer, Dominik, 44265 Dortmund-Wellinghofen (DE); Hoene, Albrecht Dr., 93138 Lappersdorf (DE)

(56) Entgegenhaltungen:
- FR-A- 1 173 629
- US-A1- 2002 104 736

## Beschreibung

Die Erfindung betrifft ein Fördersystem für Behälter, insbesondere eine Flughafen-Gepäckförderanlage, und eine vertikale Weiche für ein Fördersystem gemäß den Oberbegriffen der Ansprüche 1 und 11.

Vertikale Weichen oder Kreuzungen für Fördersysteme, insbesondere Flughafen-Gepäckförderanlagen, sind bekannt. Eine solche Kreuzung für Fördersysteme wird im Dokument FR-A-1 173 629 beschrieben. Dabei werden Behälter beispielsweise mit Gepäckstücken entlang von Förderbahnen gefördert. Die Förderbahnen befinden sich meist auch in vertikal beabstandeten Förderebnen, die mittels vertikaler Weichen miteinander verbunden sind. Die Weichen weisen eine vertikale Steigung auf, über welche die Behälter von einer Förderbahn zur anderen transportierbar sind. Die Steigung ist dabei von oben nach unten entlang der Förderbahn gesehen zunächst vertikal konvex und anschließend vertikal konkav ausgebildet, um eine möglichst gleichmäßige Bewegung der Behälter zu erzielen. Die konvexe und konkave Wegführung wird mittels aneinandergereihter gerader Förderelemente nachgebildet. Hierzu werden die geraden Förderelemente aus der horizontalen Lage in eine entsprechende Winkellage bewegt. Die Förderelemente verbleiben solange in der Winkellage, bis ein Behälter das Förderelement vollständig durchlaufen hat.

Nachteilig ist dabei, dass ein hoher Behälterverschleiß sowie ein lautes Transportgeräusch auftritt.

Alternativ können die Förderelemente auch aus der Winkellage in die Horizontale zurückgeführt werden, während sich der Behälter noch auf dem Förderelement befindet.

Nachteilig ist dabei, dass man entsprechend der Fördergeschwindigkeit relativ lange Förderelemente benötigt, was mit einer Durchsatzverringerung verbunden ist. Weiter sind auch dann eine Vielzahl von Schaltungen erforderlich, wenn zwei aufeinanderfolgende Behälter in die gleiche Richtung transportiert werden.

Die Aufgabe der Erfindung ist es, ein Fördersystem und eine Weiche für ein solches Fördersystem vorzuschlagen, das bei hohem Durchsatz mit einem geringen Behälterverschleiß und relativ leisen Transportgeräuschen verbunden ist.

Die Lösung der Aufgabe ist bezogen auf das Fördersystem durch die im Anspruch 1 und bezogen auf die vertikale Weiche durch die im Anspruch 11 angegebenen Merkmale gegeben. Durch die kennzeichnenden Merkmale der Unteransprüche ist das Fördersystem in vorteilhafter Weise weiter ausgestaltet.

Die Lösung sieht bezogen auf das Fördersystem vor, dass die Förderbahnen derselben Ebene jeweils im Bereich der Weiche mittels zweier nach außen bewegbarer Antriebsmittel verbindbar und die zu verschiedenen Ebenen gehörenden Förderbahnen bei nach außen bewegten Antriebsmitteln in Förderrichtung nur über die Steigung verbunden sind, wobei zumindest ein konkav gekrümmtes Element der Steigung vertikal eingeschwenkt ist, dass die Behälter auf ihrer Bodenunterseite zumindest eine in Bewegungsrichtung der Behälter verlaufende schlitzförmige Ausnehmung aufweisen, wobei die Antriebsmittel beim Behälterdurchlauf des konvexen Bereichs von unten in die Ausnehmung eingreifen und die Behälter nur mit ihrer in Bewegungsrichtung gesehen vorderen und hinteren Kante der Ausnehmung auf dem zugehörigen konvexen und konkaven Antriebsmittel aufliegen. Dabei werden die Antriebsmittel nach außen bewegt, so dass diese dem Behälter die vertikale Steigung freigeben. Weiter reicht es aus, dass nur das konkav gekrümmte Element zur Bildung der Steigung einschwenkbar ausgeführt ist. Der mit seinen Kanten der Ausnehmung auf den Antriebsmitteln aufliegende Behälter nimmt auf diese Weise während des gesamten Fördervorgangs eine stabile Lage ein. Die Behälterbewegung ist nahezu ruck- und stoßfrei.

Ein gleichmäßiger Transport der Behälter wird erreicht, wenn die Steigung zumindest aus einem konkav und einem konvex gekrümmten Element gebildet ist.

Der Verbesserung der Gleichmäßigkeit des Transport dient es, dass zwischen den konkav und konvex gekrümmten Elementen eine gerade ausgebildete Steigungs-Förderstrecke vorgesehen ist, auf der die Behälter mit ihrer Bodenunterseite aufliegen.

Um den Behältertransport auf der unteren Ebene nicht zu stören, wird vorgeschlagen, dass die geraden Steigungs-Förderstrecken nach außen aus dem Durchgangsbereich der Behälter bewegbar sind.

Zur besseren Anpassfähigkeit der geraden Steigungs-Förderstrecken sind diese aus zwei geraden Teilstrecken und einem dazwischen liegendem Antriebsrad gebildet.

Zweckmäßigerweise wird als Antriebsmittel ein Antriebsband verwendet.

Konstruktiv einfach ist es, wenn das Antriebsband über ein Führungselement geführt ist, das einen zum konvexen bzw. konkaven Bereich korrespondierenden Verlauf aufweist.

Zur Verbesserung des gleichmäßigen Durchlaufs der Behälter wird vorgeschlagen, dass das Führungselement mit den beiden Seitenflächen der Ausnehmung zur Führung des Behälters zusammenwirkt.

Das Führungselement als Platte auszubilden und deren Dicke dem Abstand der beiden Seitenflächen entsprechen zu lassen, führt zu einer konstruktiv einfachen Lösung.

Die Ruck- und Stoßfreiheit lässt sich weiter verbessern, wenn die Behälter auf ihrer Bodenunterseite jeweils zwei parallele schlitzförmige Ausnehmungen mit einem rechteckigen Querschnitt aufweisen, deren Längs- und Querseiten parallel verlaufen und in welche zwei entsprechend parallel zueinander angeordnete Führungselemente eingreifen.

Die Lösung sieht bezogen auf die vertikale Weiche vor, dass die Förderbahnen derselben Ebene jeweils im Bereich der Weiche mittels zweier nach außen bewegbarer Antriebsmittel verbindbar und die zu verschiedenen Ebenen gehörenden Förderbahnen bei nach außen bewegten Antriebsmitteln in Förderrichtung nur über die Steigung verbunden sind, wobei zumindest ein konkav gekrümmtes Element der Steigung vertikal eingeschwenkt ist, dass die Behälter auf ihrer Bodenunterseite zumindest eine in Bewegungsrichtung der Behälter verlaufende schlitzförmige Ausnehmung aufweisen, wobei die Antriebsmittel beim Behälterdurchlauf des konvexen Bereichs von unten in die Ausnehmung eingreifen und die Behälter nur mit ihrer in Bewegungsrichtung gesehen vorderen und hinteren Kante der Ausnehmung auf dem zugehörigen konvexen und konkaven Antriebsmittel aufliegen.

Die Erfindung wird nachfolgend anhand einer Zeichnung näher beschrieben. Es zeigen:
- Fig. 1: einen Behälter für ein Fördersystem,
- Fig. 2: eine Weiche eines Fördersystems, wobei jeweils nur die beiden Förderbahnen derselben Ebene verbundenen sind,
- Fig. 3: die Weiche gemäß Fig. 2, wobei die Förderbahnen verschiedener Ebenen miteinander verbundenen sind, und
- Fig. 4: einen vergrößerten Ausschnitt der Weiche gemäß Fig. 3.

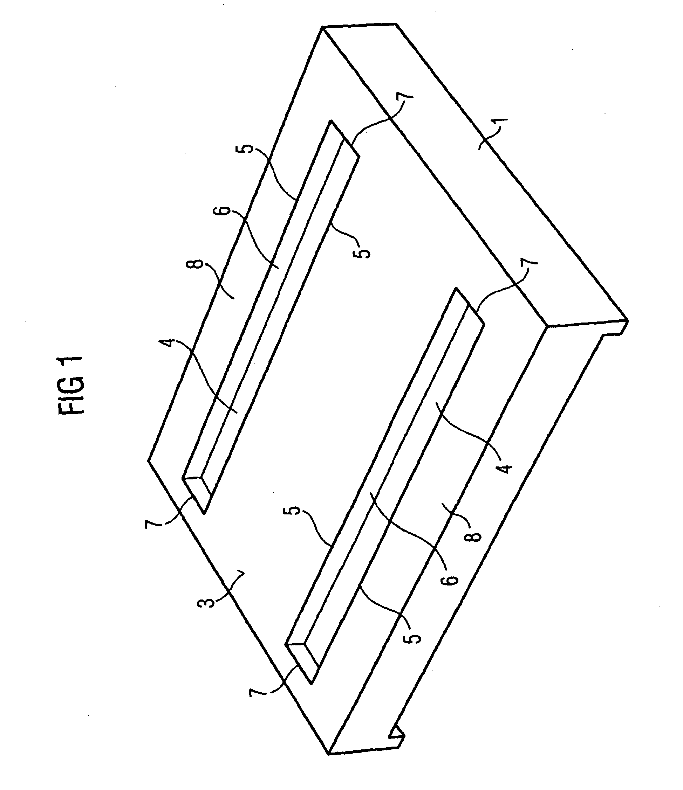

Fig. 1 zeigt einen Behälter 1 für ein Fördersystem mit einer vertikalen Weiche 2 mit Blick auf dessen Bodenunterseite 3, die hier eben ausgebildet ist. Die Bodenunterseite 3 weist zwei Ausnehmungen 4 auf, mit rechteckigem Querschnitt, deren Längsseiten 5 parallel zueinander verlaufen. Seitlich werden die beiden Ausnehmungen 4 durch parallele Seitenflächen 6 begrenzt. Im Bewegungsrichtung der Behälter 1 weisen die Ausnehmungen 4 vorn und hinten jeweils eine Stirnkante 7 auf. Diese dienen wie die beiden seitlichen Auflageflächen 8 dem Behältertransport.

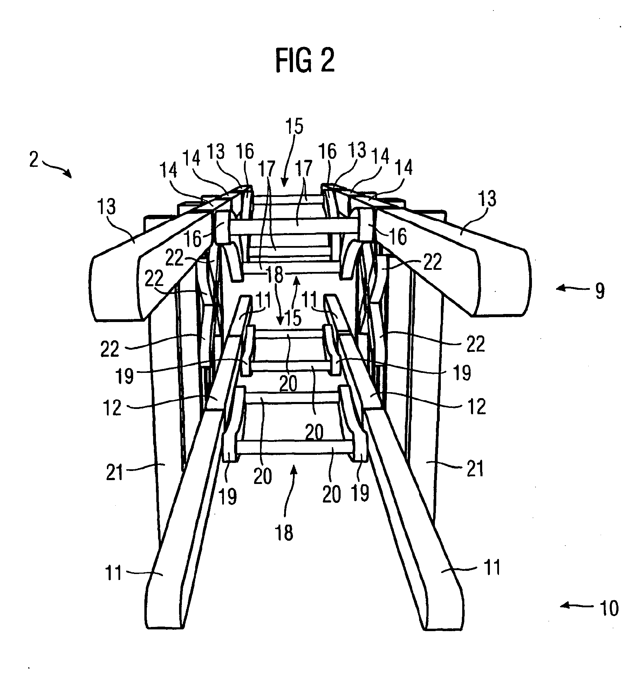

In Fig. 2 ist die Weiche 2 in der Betriebsart angezeigt, in der kein Wechsel der Behälter 1 von der oberen Förderebene 9 in die untere Förderebene 10 erfolgt. In jeder der beiden Förderebenen 9, 10 ist eine Förderbahn vorhanden, die aus den geraden Förderelementen 11, 12 (untere Förderbahn) und den geraden Förderelementen 13, 14 (obere Förderbahn) gebildet ist, auf denen die Behälter 1 beim Durchlauf beidseitig mit den Seitenflächen 8 aufliegen. Die Förderelemente 11, 12, 13, 14 sind in Fig. 2 stark schematisiert dargestellt; sie bestehen jeweils aus Führungselementen, um die jeweils Endlosbänder als Antriebsmittel umlaufen, wobei zur Umlenkung der Endlosbänder Umlenkrollen (ebenfalls nicht gezeigt) vorgesehen sind.

Die Förderelemente 14 sind zusammen mit den zugehörigen Antriebsbändern jeweils nach außen hin verschiebbar, und zwar zumindest soweit, dass die Behälter 1 über ein in Fig. 2 gezeigtes vertikal konvexes Förderelement 15 nach unten zur unteren Förderebene 10 hin "abtauchen" können. Wie Fig. 2 zeigt, weist die Weiche 2 zwei konvexe Förderelemente 15 auf, für jede Förderrichtung eines.

Jedes Förderelement 15 besteht aus zwei Seitenelementen 16, die mittels Achsen 17 miteinander verbunden sind. Für die Seitenelemente 16 gilt das für die linearen Förderelemente 11, 12, 13, 14 Gesagte: Sie bestehen aus entsprechend geformten Führungselementen um die Endlosbänder als Antriebsmittel umlaufen.

Wie Fig. 2 weiter zeigt, sind im Bereich der unteren Förderebene 10 ähnlich aufgebaute Elemente 18 vorhanden, deren Seitenelemente 19 allerdings zur Behälterunterseite 3 hin konkav gekrümmt sind. Auch hier handelt es sich bei den Seitenelementen 19 um Führungselemente mit umlaufenden Endlosbändern. Verbunden sind die Seitenelemente 19 jeweils durch ein Paar von Achsen 20, Um den Durchlauf der Behälter 1 nicht zu stören, sind die Elemente 18 in Fig. 2 jeweils nach unten aus dem Durchlaufbereich geschwenkt. Für jede Förderrichtung ist wiederum jeweils ein Element 18 vorgesehen.

Die Weiche 2 ist in einem Rahmen angeordnet, der aus Stützelementen 21 gebildet ist. Auf der Innenseite der Stützelemente sind beidseitig der Förderbahn noch weitere lineare Förderelemente 22 vorgesehen, die sich in Fig. 2 außerhalb des Durchlaufbereichs in einer Bereitschaftsstellung befinden.

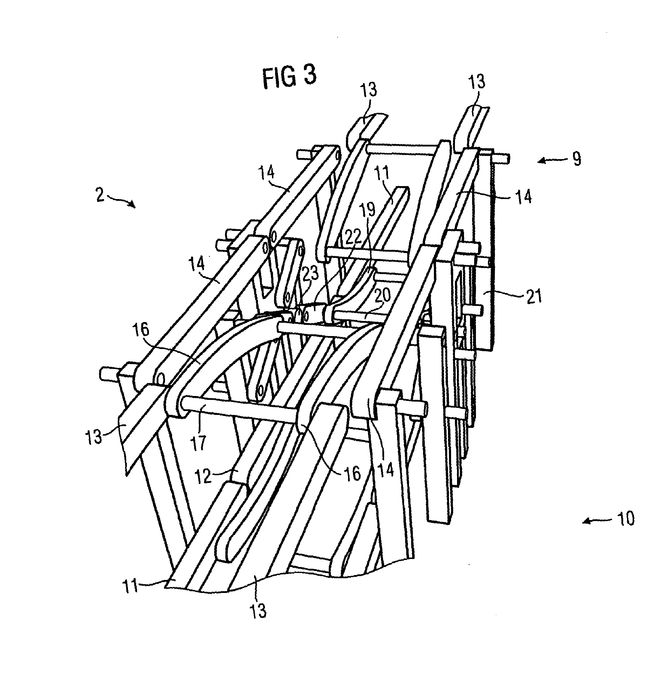

Fig. 3 zeigt die Weiche 2 gemäß Fig. 2 von schräg oben gesehen in der eigentlichen Weichenbetriebsart, bei der die Förderbahnen der Ebenen 9, 10 über die Weiche 2 miteinander verbunden sind. In der Weichenbetriebsart sind die beiden linearen Förderelemente 14 auf jeder Seite jeweils nach außen gefahren. Die Durchlaufrichtung der Behälter 1 ist hierbei bezogen auf Fig. 3 von links unten nach rechts oben. Der Behältertransport verläuft dabei über eine vertikale Steigung, die beidseitig aus den Elementen 16, 22, 22, 19 gebildet wird. Das konkave Element 18 mit den Seitenelementen 19 ist hierzu nach oben in den Zwischenraum zwischen den beiden Ebenen 9, 10 hineingeschwenkt.

Die geraden kurzen Förderelemente 22 sind - wie in Fig. 3 gezeigt - jeweils nach innen geschoben, so dass ein durchlaufender Behälter 1 nach Passieren der Elemente 16 mit seinen Seitenflächen 8 auf den Bändern der Elemente 22 aufliegt.

Fig. 3 lässt weiter erkennen, dass zwischen den Förderelementen 22 jeweils noch ein angetriebenes Rad 23 zwischengeschaltet ist, welches zusammen mit den Elementen 22 in den Durchgangsbereich der Behälter 1 geschoben werden kann und eine Steigungs-Förderstrecke bildet.

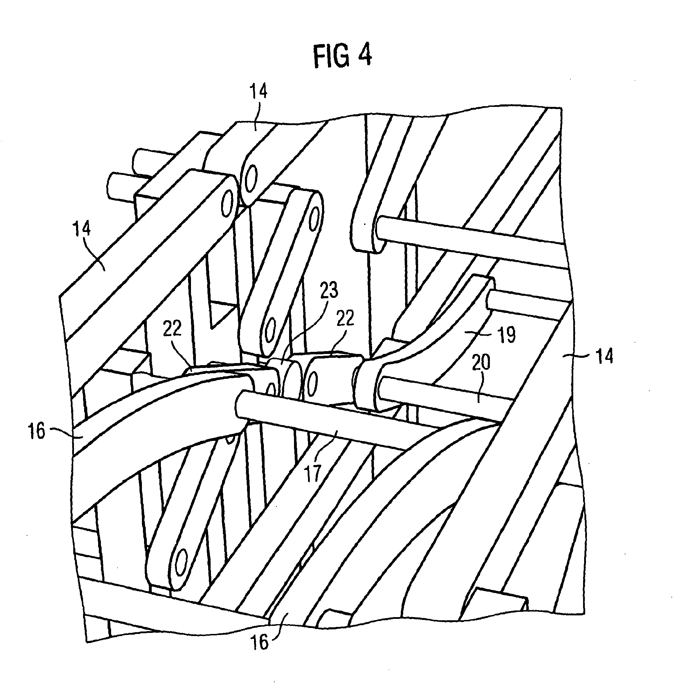

Fig. 4 zeigt die Steigung, die aus den Elementen 16, 22, 23, 22, 19 gebildet wird, in einer vergrößerten Darstellung.

Beim Durchlaufen der konvexen Elemente 16 liegt der Behälter jeweils mit seinen Stirnkanten 7 auf deren Antriebsband auf, wobei die konvexen Elemente 16 in die Ausnehmungen 4 des Behälters 1 eingreifen, ohne deren Bodenfläche zu berühren. Auch beim Passieren der konkaven Elemente 19 liegen die Behälter 1 jeweils nur mit ihren Kanten 7 auf den zugehörigen Antriebsbändern auf.

Beim Durchlauf der Behälter 1 wirken die Seitenelemente 16, 19 jeweils mit den beiden Seitenflächen 6 der Ausnehmung 4 zusammen, wobei die Behälter 1 seitlich geführt werden. Bei Ausbildung der Seitenelemente 16, 19 als Platte muss deren Dicke dem Abstand der beiden Seitenflächen 6 entsprechen. Wie Fig. 4 erkennen lässt, greifen jeweils beide Seitenelemente 16, 19 in die entsprechende Ausnehmung 4 ein, was eine zuverlässige Führung sicherstellt.

### Bezugszeichenliste

- 1: Behälter
- 2: Weiche
- 3: Bodenunterseite
- 4: Ausnehmung
- 5: Längsseite
- 6: Seitenfläche
- 7: Stirnkante
- 8: Auflagefläche
- 9: obere Förderebene
- 10: untere Förderebene
- 11: Förderelement mit Antriebsmitteln
- 12: Förderelement mit Antriebsmitteln
- 13: Förderelement mit Antriebsmitteln
- 14: Förderelement mit Antriebsmitteln
- 15: Element
- 16: Seitenelement mit Antriebsmitteln
- 17: Achse
- 18: Element
- 19: Seitenelement mit Antriebsmitteln
- 20: Achse
- 21: Stützelement
- 22: Förderelement
- 23: Rad

## Patentansprüche

1. Fördersystem für Behälter (1), insbesondere eine Flughafen-Gepäckförderanlage,
mit Förderbahnen, die in zwei vertikal beabstandeten Förderebenen (9, 10) angeordnet und mittels einer vertikalen Weiche (2) miteinander verbindbar sind,
die eine zwischen die beiden Förderbahnen schaltbare vertikale Steigung (16, 22, 23, 22, 19) aufweist,
welche von oben nach unten entlang der Förderbahn gesehen zunächst vertikal konvex (16) und anschließend vertikal konkav (19) ausgebildet ist, **dadurch gekennzeichnet, dass** die Steigung (16, 22, 23, 22, 19) Antriebsmitteln (16, 22, 23, 22, 19) aufweist, welche die Behälter (1) im Steigungsbereich bewegen und auf denen die Behälter (1) mit ihrer Bodenunterseite (3) aufliegen, wobei
die Förderbahnen derselben Ebene (9, 10) jeweils im Bereich der Weiche (2) mittels zweier nach außen bewegbarer Antriebsmittel (14) verbindbar und die zu verschiedenen Ebenen (9, 10) gehörenden Förderbahnen bei nach außen bewegten Antriebsmitteln (14) in Förderrichtung nur über die Steigung (16, 22, 23, 22, 19) verbunden sind, wobei zumindest ein konkav gekrümmtes Element (18) der Steigung (16, 22, 23, 22, 19) vertikal eingeschwenkt ist,
**dass** die Behälter (1) auf ihrer Bodenunterseite (3) zumindest eine in Bewegungsrichtung der Behälter (1) verlaufende schlitzförmige Ausnehmung (4) aufweisen,
wobei die Antriebsmittel (16) beim Durchlaufen des konvexen Bereichs von unten in die Ausnehmung (4) eingreifen und die Behälter (1) nur mit ihrer in Bewegungsrichtung gesehen vorderen und hinteren Kante (7) der Ausnehmung (4) auf dem zugehörigen konvexen und konkaven Antriebsmittel (16, 19) aufliegen.

2. Fördersystem nach Anspruch 1,
**dadurch gekennzeichnet,**
**dass** die Steigung (16, 22, 23, 22, 19) zumindest aus einem konkav und einem konvex gekrümmten Element (16, 19) gebildet ist.

3. Fördersystem nach Anspruch 2,
**dadurch gekennzeichnet,**
**dass** zwischen den konkav und konvex gekrümmten Elementen (16, 19) eine gerade ausgebildete Steigungs-Förderstrecke (22, 23, 22) vorgesehen ist, auf der die Behälter (1) mit ihrer Bodenunterseite (3) aufliegen.

4. Fördersystem nach Anspruch 3,
**dadurch gekennzeichnet,**
**dass** die geraden Steigungs-Förderstrecken (22, 23, 22) nach außen aus dem Durchgangsbereich der Behälter (1) bewegbar sind.

5. Fördersystem nach Anspruch 3 oder 4,
**dadurch gekennzeichnet,**
**dass** die geraden Steigungs-Förderstrecken (22, 23, 22) aus zwei geraden Teilstrecken (22, 22) und einem dazwischenliegenden Antriebsrad (23) gebildet sind.

6. Fördersystem nach einem der Ansprüche 1 - 5,
**dadurch gekennzeichnet,**
**dass** die Antriebsmittel als Antriebsband ausgebildet sind.

7. Fördersystem nach Anspruch 6,
**dadurch gekennzeichnet,**
**dass** das Antriebsband über ein Führungselement geführt ist, das einen zum konvexen bzw. konkaven Bereich korrespondierenden Verlauf aufweist.

8. Fördersystem nach Anspruch 7,
**dadurch gekennzeichnet,**
**dass** das Führungselement mit den beiden Seitenflächen (6) der Ausnehmung (4) zur Führung des Behälters (1) zusammenwirkt.

9. Fördersystem nach Anspruch 8,
**dadurch gekennzeichnet,**
**dass** das Führungselement als Platte ausgebildet ist, deren Dicke dem Abstand der beiden Seitenflächen (6) entspricht.

10. Fördersystem nach einem der Ansprüche 1 - 9,
**dadurch gekennzeichnet,**
**dass** die Behälter (1) auf ihrer Bodenunterseite (3) jeweils zwei parallele schlitzförmige Ausnehmungen (4) mit einem rechteckigen Querschnitt aufweisen, deren Längsseiten (5) parallel zueinander verlaufen und in welche beim Behälterdurchlauf zwei entsprechend parallel zueinander angeordnete Antriebsmittel (16) eingreifen.

11. Vertikalen Weiche (2) eines Fördersystems für Behälter (1), insbesondere eine Flughafen-Gepäckförderanlage,
das Förderbahnen aufweist, die in zwei vertikal beabstandeten Förderebenen (9, 10) angeordnet und mittels der Weiche (2) miteinander verbindbar sind,
wobei die Weiche (2) eine zwischen die beiden Förderbahnen schaltbare vertikale Steigung (16, 22, 23, 22, 19) aufweist, welche von oben nach unten entlang der Förderbahn gesehen zunächst vertikal konvex und anschließend vertikal konkav ausgebildet ist,
**dadurch gekennzeichnet,**
**dass** wobei Antriebsmittel (16, 22, 23, 22, 19) vorgesehen sind, welche die Behälter (1) im Steigungsbereich bewegen und auf denen die Behälter (1) mit ihrer Bodenunterseite (3) aufliegen, die Förderbahnen derselben Ebene jeweils im Bereich der Weiche (2) mittels zweier nach außen bewegbarer Antriebsmittel (14) verbindbar und die zu verschiedenen Ebenen gehörenden Förderbahnen bei nach außen bewegten Antriebsmitteln (14) in Förderrichtung nur über die Steigung (16, 22, 23, 22, 19) verbunden sind, wobei zumindest ein konkav gekrümmtes Element (18) der Steigung (16, 22, 23, 22, 19) vertikal eingeschwenkt ist,
**dass** die Behälter (1) auf ihrer Bodenunterseite (3) zumindest eine in Bewegungsrichtung der Behälter (1) verlaufende schlitzförmige Ausnehmung (4) aufweisen,
wobei die Antriebsmittel (16) beim Durchlaufen des konvexen Bereichs von unten in die Ausnehmung (4) eingreifen und die Behälter (1) nur mit ihrer in Bewegungsrichtung gesehen vorderen und hinteren Kante (7) der Ausnehmung (4) auf dem zugehörigen konvexen und konkaven Antriebsmittel (16, 19) aufliegen.

## Claims

1. System for conveying containers (1), particularly a conveyor installation for baggage in airports,
having conveyor tracks which are arranged in two vertically spaced conveyor levels (9, 10) and can be connected to one another by means of a vertical switch (2),
which has a vertical slope (16, 22, 23, 22, 19) which can be switched between the two conveyor tracks,
which, as seen along the conveyor track, is initially vertically convex (16) and then vertically concave (19) from top to bottom,
**characterized in that** the slope (16, 22, 23, 22, 19) has drive means (16, 22, 23, 22, 19) which move the containers (1) in the region of the slope and on which the containers (1) rest with the underside (3) of their base,
it being possible for the conveyor tracks of the same level (9, 10) in each case to be connected in the region of the switch (2) by means of two drive means (14) that can be moved outwards, and for the conveyor tracks belonging to different levels (9, 10) to be connected in the conveying direction only via the slope (16, 22, 23, 22, 19) when the drive means (14) are moved outwards, at least one concavely curved element (18) of the slope (16, 22, 23, 22, 19) being pivoted in vertically,
**in that** the containers (1) have on the underside (3) of their base at least one slot-like recess (4) running in the direction of movement of the containers (1),
the drive means (16) engaging in the recess (4) from below as the container passes the convex region and the containers (1) resting on the associated convex and concave drive means (16, 19) only with their front and rear edge (7) of the recess (4) as seen in the direction of movement.

2. Conveyor system according to Claim 1, **characterized in that** the slope (16, 22, 23, 22, 19) is formed from at least one concavely and one convexly curved element (16, 19).

3. Conveyor system according to Claim 2, **characterized in that** a straight slope conveyor section (22, 23, 22), on which the containers (1) rest with the underside (3) of their base, is provided between the concavely and convexly curved elements (16, 19).

4. Conveyor system according to Claim 3, **characterized in that** the straight slope conveyor sections (22, 23, 22) can be moved outwards from the passage region of the containers (1).

5. Conveyor system according to Claim 3 or 4, **characterized in that** the straight slope conveyor sections (22, 23, 22) are formed from two straight part sections (22, 22) and a drive wheel (23) located in between them.

6. Conveyor system according to one of Claims 1 - 5, **characterized in that** the drive means used is a drive belt.

7. Conveyor system according to Claim 6, **characterized in that** the drive belt is led over a guide element which has a course corresponding to the convex or concave region.

8. Conveyor system according to Claim 7, **characterized in that** the guide element interacts with the two side surfaces (6) of the recess (4) in order to guide the container (1).

9. Conveyor system according to Claim 8, **characterized in that** the guide element is formed as a plate whose thickness corresponds to the distance between the two side surfaces (6).

10. Conveyor system according to one of Claims 1 - 9, **characterized in that** the containers (1) in each case have on the underside (3) of their base two parallel slot-like recesses (4) with a rectangular cross section, whose longitudinal sides (5) run parallel to each other and in which two drive means (16) arranged correspondingly parallel to each other engage as the containers pass.

11. Vertical switch (2) for a conveyor system for containers (1), particularly a conveyor installation for baggage in airports,
which has conveyor tracks which are arranged in two vertically spaced conveyor levels (9, 10) and can be connected to one another by means of the switch (2),
the switch (2) having a vertical slope (16, 22, 23, 22, 19) which can be switched between the two conveyor tracks, which, as seen along the conveyor track, is initially vertically convex and then vertically concave from top to bottom,
**characterized in that** drive means (16, 22, 23, 22, 19) are provided which move the containers (1) in the region of the slope and on which the containers (1) rest with the underside (3) of their base,
it being possible for the conveyor tracks of the same level in each case to be connected in the region of the switch (2) by means of two drive means (14) that can be moved outwards, and for the conveyor tracks belonging to different levels to be connected in the conveying direction only via the slope (16, 22, 23, 22, 19) when the drive means (14) are moved outwards, at least one concavely curved element (18) of the slope (16, 22, 23, 22, 19) being pivoted in vertically,
**in that** the containers (1) have on the underside (3) of their base at least one slot-like recess (4) running in the direction of movement of the containers (1),
the drive means (16) engaging in the recess (4) from below as the container passes the convex region and the containers (1) resting on the associated convex and concave drive means (16, 19) only with their front and rear edge (7) of the recess (4) as seen in the direction of movement.

## Revendications

1. Système de convoyage de conteneurs (1), notamment installation de transport de bagages dans un aéroport, comprenant des voies de convoyage qui sont disposées dans deux plans (9, 10) de convoyage à distance suivant la verticale et qui peuvent être reliées entre elles au moyen d'un aiguillage (2) vertical qui a une rampe (16, 22, 23, 22, 19) verticale qui peut être mise entre les deux voies de convoyage et qui, vue de haut en bas le long de la voie de convoyage, est d'abord convexe (16) verticalement et ensuite concave (19) verticalement,
**caractérisé en ce que** la rampe (16, 22, 23, 22, 19) a des moyens (16, 22, 23, 22, 19) d'entraînement qui déplacent les conteneurs (1) dans la zone de la rampe et sur lesquels les conteneurs (1) s'appliquent par leur face (3) inférieure de fond,
les voies de convoyage du même plan (9, 10) pouvant être reliées respectivement dans la zone de l'aiguillage (2) à l'aide de deux moyens (14) d'entraînement mobiles vers l'extérieur et les voies de convoyage appartenant aux divers plans (9, 10) n'étant reliées, lorsque les moyens (14) d'entraînement sont déplacés vers l'extérieur dans la direction de convoyage, que par la rampe (16, 22, 23, 22, 19), au moins un élément (18) concave de la rampe (16, 22, 23, 22, 19) étant basculé verticalement,
**en ce que** les conteneurs (1) ont sur leur face (13) inférieure de fond au moins un évidement (4) en forme de fente s'étendant dans la direction de déplacement des conteneurs (1),
les moyens (16) d'entraînement pénétrant, lors du passage de la zone convexe, par le bas dans l'évidement (4) et les conteneurs (1) ne reposant que par leurs bords (7) avant et arrière, considérés dans le sens du déplacement, de l'évidement (4) sur les moyens (16, 19) d'entraînement associés convexes et concaves.

2. Système de convoyage suivant la revendication 1, **caractérisé en ce que** la rampe (16, 22, 23, 22, 19) est formée au moins d'un élément (16) concave et au moins d'un élément (19) convexe.

3. Système de convoyage suivant la revendication 2, **caractérisé en ce qu'**il est prévu, entre les éléments (16, 19) concaves et convexes, une section (22, 23, 22) de convoyage en pente qui est rectiligne et sur laquelle les conteneurs (1) reposent par leur face (3) inférieure de fond.

4. Système de convoyage suivant la revendication 3, **caractérisé en ce que** les sections (22, 23, 22) de convoyeurs en pente rectilignes sont mobiles vers l'extérieur, hors de la zone de passage des convoyeurs (1).

5. Système de convoyage suivant la revendication 3 ou 4, **caractérisé en ce que** les sections (22, 23, 22) de convoyeurs en pente rectilignes sont formées de deux sous-sections (22, 22) rectilignes et d'une roue (23) d'entraînement interposée entre elles.

6. Système de convoyage suivant l'une des revendications 1 à 5, **caractérisé en ce que** les moyens d'entraînement sont constitués sous la forme d'une bande d'entraînement.

7. Système de convoyage suivant la revendication 6, **caractérisé en ce que** la bande d'entraînement est guidée sur un élément de guidage qui a un tracé correspondant à la zone convexe ou concave.

8. Système de convoyage suivant la revendication 7,
**caractérisé en ce que** l'élément de guidage coopère avec les deux surfaces (6) latérales de l'évidement (4) pour guider le conteneur (1).

9. Système de convoyage suivant la revendication 8, **caractérisé en ce que** l'élément de guidage est constitué sous la forme d'un plateau dont l'épaisseur correspond à la distance entre les deux faces (6) latérales.

10. Système de convoyage suivant l'une des revendications 1 à 9, **caractérisé en ce que** les conteneurs (1) ont, sur leur face (3) inférieure de fond, respectivement deux évidements (4) parallèles en forme de pentes de section transversale rectangulaire, dont les grands côtés (5) s'étendent parallèlement entre eux et dans lesquels pénètrent, lors du passage des récipients, deux moyens (16) d'entraînement correspondants disposés parallèlement entre eux.

11. Aiguillage (2) vertical d'un système de convoyage de conteneurs (1), notamment installation de transport de bagages dans un aéroport, qui a des voies de convoyage, qui sont disposées dans deux plans (9, 10) de convoyage à distance suivant la verticale et qui peuvent être reliées entre elles au moyen d'un aiguillage (2) vertical qui a une rampe (16, 22, 23, 22, 19) verticale qui peut être mise entre les deux voies de convoyage et qui, vue de haut en bas le long de la voie de convoyage, est d'abord convexe (16) verticalement et ensuite concave (19) verticalement,
**caractérisé en ce qu'**il est prévu des moyens (16, 22, 23, 22, 19) d'entraînement qui déplacent les conteneurs (1) dans la zone de la rampe et sur lesquels les conteneurs (1) reposent par leur face (3) inférieure de fond,
les voies de convoyage du même plan pouvant être reliées respectivement dans la zone de l'aiguillage (2) à l'aide de deux moyens (14) d'entraînement mobiles vers l'extérieur et les voies de convoyage appartenant aux divers plans (9, 10) n'étant reliées, lorsque les moyens (14) d'entraînement sont déplacés vers l'extérieur dans la direction de convoyage, que par la rampe (16, 22, 23, 22, 19), au moins un élément (18) concave de la rampe (16, 22, 23, 22, 19) étant basculé verticalement,
**en ce que** les conteneurs (1) ont sur leur face (13) inférieure de fond au moins un évidement (4) en forme de fente s'étendant dans la direction de déplacement des conteneurs (1),
les moyens (16) d'entraînement pénétrant, lors du passage de la zone convexe, par le bas dans l'évidement (4) et les conteneurs (1) ne reposant que par leurs bords (7) avant et arrière, considérés dans le sens du déplacement, de l'évidement (4) sur les moyens (16, 19) d'entraînement associés convexes et concaves.
